# EUROPÄISCHE PATENTSCHRIFT

(11) **EP 4 113 408 B1**
(45) Veröffentlichungstag und Bekanntmachung des Hinweises auf die Patenterteilung: **29.07.2026**
(21) Anmeldenummer: 22176911.0
(22) Anmeldetag: 02.06.2022
(51) Int. Cl.: G06Q 10/08, G06Q 50/40

(54) **VERFAHREN ZUM BE- UND ENTLADEN EINER LADEEINHEIT, INSBESONDERE EINER LADEFLÄCHE EINES LASTKRAFTWAGENS ODER EINES GÜTERZUGWAGONS**
METHOD FOR LOADING AND UNLOADING A LOADING UNIT, IN PARTICULAR A LOADING AREA OF A TRUCK OR A FREIGHT TRAIN CAR
PROCÉDÉ DE CHARGEMENT ET DE DÉCHARGEMENT D'UNE UNITÉ DE CHARGEMENT, EN PARTICULIER D'UNE SURFACE DE CHARGEMENT D'UN CAMION OU D'UN WAGON DU FRET FERROVIAIRE

(30) Priorität: 01.07.2021 DE 102021116982
(43) Veröffentlichungstag der Anmeldung: 04.01.2023
(73) Patentinhaber: STILL GmbH, 22113 Hamburg (DE)
(72) Erfinder: BERGMANN, Ansgar, 22941 Bargteheide (DE)
(74) Vertreter: Patentship Patentanwaltgesellschaft

(56) Entgegenhaltungen:
- US-A1- 2014 277 691
- US-A1- 2017 132 561
- US-A1- 2019 196 505
- US-B1- 8 639 591

## Beschreibung

Die Erfindung betrifft ein Verfahren zum Be- und Entladen einer Ladeeinheit, insbesondere einer Ladefläche eines Lastkraftwagens oder eines Güterzugwagons oder einer anderen geeigneten Transporteinrichtung, wobei während eines Beladevorgangs ein digitaler Zwilling des Ladezustands der Ladeeinheit aus Daten des Beladevorgangs in einer elektronischen Datenverarbeitungseinheit erstellt wird, wobei der digitale Zwilling Informationen über Art und Position der einzelnen Ladegüter in der Ladeeinheit enthält, und die Informationen des digitalen Zwillings für einen Entladevorgang zur Verfügung gestellt werden.

Zum Transport von Ladegütern, beispielsweise zum Warenversand von in Paketen verpackten Waren, werden üblicherweise Transportfahrzeuge mit Ladeeinheiten verwendet, in die Ladegüter am Ursprungsort eingeladen und aus denen sie am Zielort wieder ausgeladen werden. Als Ladeeinheiten können beispielsweise Ladeflächen von Lastkraftwagen oder Güterzugwagons dienen oder anderen geeigneten Transporteinrichtung, beispielsweise Flugzeuge etc...

Insbesondere beim Transport mittels Lastkraftwagen wird in der Regel routenoptimal gepackt, was aber in der Regel nicht bedeutet, dass dies auch die beste Nutzung des Ladevolumens der Ladeeinheit bedeutet. Auch liegen üblicherweise keine detaillierten Informationen über den Packzustand der Ladeeinheit, beispielsweise der Ladefläche des Lastkraftwagens, vor, so dass Waren eventuell zeitaufwändig gesucht werden müssen und optimierte Prozesse mit automatischen Systemen zum Be- und Entladen der Ladeeinheit nur schwer möglich sind.

Ort und Beschaffenheit der Ware in der Ladeeinheit, beispielsweise auf der Ladefläche eines Lastkraftwagens, sind in der Regel unbekannt. Eine Vorab-Planung des Entladevorgangs der Ladeeinheit ist daher nicht möglich. Auch eine automatisierte Entladung ist nahezu unmöglich. Außerdem ist der Entladevorgang der Ladeeinheit zeitaufwändig. Problematisch ist darüber hinaus, dass die Ladeeinheit, beispielsweise eine Ladefläche eines Lastkraftwagens, häufig nicht optimal gepackt ist.

Aus der US 2017/132561 A1 ist ein gattungsgemäßes Verfahren mit den Merkmalen des Oberbegriffs des Patentanspruchs 1 bekannt.

Die US 2014/277691 A1 offenbart ein automatisiertes Lager, in dem autonome Flurförderzeuge und manuell bediente Flurförderzeuge verwendet werden.

Die US 2019/196505 A1 offenbart ein System zum Be- und Entladen einer Ladeeinheit, bei dem mit mehreren in Reihe angeordneten autonomen Flurförderzeugen (AGVs) ein Förderband zum Be- und Entladen der Ladeeinheit gebildet wird.

Die US 8 639 591 B1 offenbart ein System und ein Verfahren zum Erzeugen einer visuellen Anzeige, die den Status mehrerer Frachtladungen anzeigt.

Der vorliegenden Erfindung liegt die Aufgabe zugrunde, ein Verfahren der genannten Art so auszugestalten, dass das Be- und Entladen der Ladeeinheit verbessert wird.

Diese Aufgabe wird erfindungsgemäß dadurch gelöst, dass durch mindestens einen Beladevorgang Ladegüter mittels mindestens eines Flurförderzeugs in die Ladeeinheit geladen und durch mindestens einen Entladevorgang Ladegüter mittels mindestens eines Flurförderzeugs aus der Ladeeinheit entladen werden, wobei aus den Betriebsdaten des Flurförderzeugs die Positionsdaten jedes einzelnen Ladeguts, welches mittels des Flurförderzeugs in der Ladeeinheit abgelegt wird, ermittelt werden.

Dabei liegt der Erfindung die Überlegung zu Grunde, dass beim Beladevorgang Informationen über den Ladezustand der Ladeeinheit gesammelt werden können, aus denen ein digitales Abbild des Ladezustands der Ladeeinheit und somit ein digitales Abbild vom Ladegut in der Ladeeinheit erstellt werden kann. Das digitale Abbild kann in einer Datenverarbeitungseinheit hinterlegt werden, so dass die Informationen daraus auf Bedarf abgerufen werden können. Somit kann beim Entladevorgang auf diese Informationen zurück gegriffen werden. Da nun für den Entladevorgang eine genaue Kenntnis über den Ladezustand der Ladeeinheit vorliegt, kann der Entladevorgang optimiert werden. Beispielsweise kann ein für den Entladevorgang vorgesehenes Flurförderzeug gezielt ein zum Entladen bestimmtes Ladegut innerhalb der Ladeeinheit ansteuern.

Die Erfindung bezieht sich also im ersten Ansatz auf die Erstellung eines digitalen Zwillings vom Ladegut in der Ladeeinheit während des Beladevorgangs und der zur Verfügung Stellung dieser Daten für weitere Operationen. Dieser digitale Zwilling beinhaltet insbesondere Informationen über die Art des einzelnen Ladeguts, zum Beispiel über Größe, Gewicht, Art der Verpackung und/oder besondere Merkmale der Ware, sowie über die Position dieses Ladeguts in der Ladeeinheit im dreidimensionalen Raum, also über die 3D-Positionierung des Ladeguts. Dieser digitale Zwilling ist ein hundertprozentiges Abbild des Zustands in der Ladeeinheit.

Unter einem digitalen Zwilling (engl. digital twin) versteht man im Allgemeinen eine digitale Repräsentanz eines materiellen oder immateriellen Objekts oder Prozesses aus der realen Welt in der digitalen Welt.

Die Daten des Beladevorgangs, aus denen der digitale Zwilling erstellt wird, können insbesondere aus Daten eines Warenmanagementsystems, aus denen die Art des einzelnen Ladeguts bekannt ist, und aus Betriebsdaten des zum Beladen eingesetzten Flurförderzeugs, aus denen die Position des einzelnen Ladeguts nach dem Beladen bekannt ist, gewonnen werden. Hierzu können zum Beispiel Fahrwegdaten und Bewegungsdaten einer Handhabungseinrichtung des Flurförderzeugs dienen, die beim Beladevorgang gesammelt werden. Dabei ist es unerheblich, ob es sich um einen automatisierten oder manuellen Beladevorgang handelt, die Ansätze gelten für beides. Weiterhin können die Daten des Beladevorgangs, aus denen der digitale Zwilling erstellt wird, aus verschiedenen Arten von externen Sensoren, beispielsweise 2D/3D Laser-Scanner, unterschiedlichen Kamerasystemen oder Ortungssystemen basierend auf RFID, Bluetooth oder UWB, gewonnen werden, insbesondere externe Sensoren für die Ermittlung von Positionsdaten des Fahrzeugs und Position und Art des Ladeguts herangezogen werden. Insgesamt ergibt sich somit ein genaues Abbild davon, welches spezielle Ladegut sich an welchem Ort innerhalb der Ladeeinheit befindet.

Es ist von großem Vorteil, wenn die Informationen des digitalen Zwillings dem jeweiligen Empfänger am Zielort zur Verfügung gestellt werden können, damit dort ein optimaler Entladevorgang ermöglicht wird. Die Informationen des digitalen Zwillings werden daher sinnvoller Weise in einer Cloudapplikation hinterlegt, beispielsweise als Webapplikation oder als Applikation mit frei nutzbaren API oder ähnlichen Schnittstellen mit entsprechenden Userrechten und - rollen ausgeführt. Somit können die Informationen am Zielort sowohl abgerufen, als auch bei Bedarf angepasst werden, wenn Ladegut entnommen oder hinzugefügt wird.

Zweckmäßigerweise werden die Informationen des digitalen Zwillings des Ladezustands der Ladeeinheit bei jedem Be- und Entladevorgang aktualisiert, so dass ein bidirektionaler digitaler Zwilling entsteht und sich ein nachfolgender Vorgang auf die Informationen verlassen kann.

Bevorzugt enthält der digitale Zwilling auch Informationen über das beim Beladevorgang eingesetzte Flurförderzeug und/oder über das beim Entladevorgang eingesetzte Flurförderzeug. Dabei ist es von besonderem Vorteil, wenn Informationen über eine Entlade-Infrastruktur am Zielort, insbesondere Informationen über das für den Entladevorgang vorgesehene Flurförderzeug, in den digitalen Zwilling mit eingebaut werden. Auf diese Weise kann die Anordnung des Ladeguts in der Ladeeinheit auf die Entlade-Infrastruktur am Zielort hin optimiert werden. Es wird somit vermieden, dass Ladegut am Zielort schlecht oder gar nicht entladen werden kann.

Gemäß einer vorteilhaften Ausgestaltung der Erfindung wird aus den Informationen des digitalen Zwillings ein optimierter Fahrweg des Flurförderzeugs beim Entladevorgang berechnet. Da die Position und Art jedes Ladeguts in der Ladeeinheit bekannt ist, kann elektronisch der beste und schnellste Weg zur Entnahme des Ladeguts berechnet werden. Dies ermöglich sogar eine autonome Entnahme des Ladeguts aus der Ladeeinheit. Das Ladegut muss nicht ausschließlich routenoptimiert in die Ladeeinheit eingebracht werden, da eventuell eine Kombination aus Entladeund Ladevorgängen eine bessere Ausnutzung der Nutzfläche beispielsweise des Lastkraftwagens ermöglicht.

Insbesondere in Verbindung mit automatisierter Entlade-Infrastruktur kann aus den Informationen des digitalen Zwillings eine für den Entladevorgang erforderliche Entladezeit sogar im Voraus berechnet werden.

Gemäß einer besonders bevorzugten Weiterbildung des Erfindungsgedankens ist vorgesehen, dass die Informationen des digitalen Zwillings in einer elektronischen Steuerungseinheit eines autonomen Flurförderzeugs oder in einer Edge-Cloud oder in einer Cloud verarbeitet und zur Steuerung des autonomen Flurförderzeugs beim Entladevorgang verwendet werden. Auf diese Weise wird eine vollautomatische Entladung von gewünschten Ladegütern am Zielort mit hoher Effizienz ermöglicht.

Die Erfindung bietet eine ganze Reihe von Vorteilen:
Lade- und Entladevorgänge von Ladeeinheiten lassen sich bislang in der Regel nur oberflächlich zeitlich planen. Dies wird durch die Erfindung sehr viel detaillierter möglich.

Fehlerhafte Anordnungen von Ladegut, beispielsweise im Lastkraftwagen, können in den Vorwegen vermieden werden und eine optimierte automatische Entladung wird möglich.

Es sind umfangreiche Prozessverbesserungen und eventuell auch Routenoptimierungen anhand von günstigeren Entlademöglichkeiten, beispielsweise Abwägung von Transfer und Entladezeit und -möglichkeiten, realisierbar.

Auch der Beladevorgang kann für den späteren Entladevorgang optimiert werden.

Der Empfänger am Zielort kann durch den Informationsaustausch seine Planung anpassen.

Durch den digitalen Zwilling ist der Ladezustand der Ladeeinheit zu jedem Zeitpunkt dokumentiert. Ein Verlust von Ladegut wird somit unmöglich und eine unberechtigte Entnahme von Ladegut wird somit sofort ersichtlich.

Weitere Vorteile und Einzelheiten der Erfindung werden anhand des in der schematischen Figur dargestellten Ausführungsbeispiels näher erläutert. Hierbei zeigt die
- Figur: eine Prinzipskizze zum Be- und Entladen eines Lastkraftwagens.

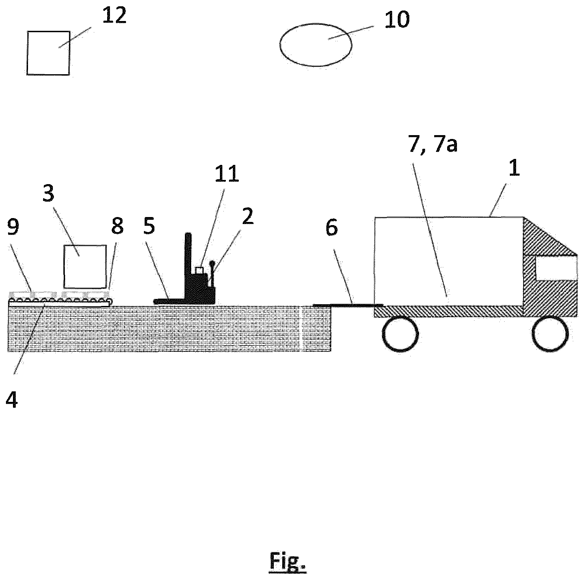

In der Figur ist das Be- und Entladen einer, eine Ladefläche 7a umfassenden, Ladeeinheit 7 eines Lastkraftwagens 1 mit einem Flurförderzeug 2 dargestellt. Die zu ladenden Ladegüter 3 befinden sich beispielsweise auf Paletten 8, 9, die beispielsweise auf einer Rollenbahn 4 bereitgestellt werden. Bei den Ladegütern 3 kann es sich zum Beispiel um Pakete handeln, in denen zu versendende Waren verpackt sind. Beim Ladevorgang nimmt das Flurförderzeug 2 die Palette 8 mit seinen Gabelzinken 5 auf, dreht sich um 180° und fährt über die Laderampe 6 auf die Ladefläche 7a des Lastkraftwagens 1. Dort setzt das Flurförderzeug 2 die Palette 8 durch Absenken der Gabelzinken 5 auf dem Boden ab. Danach fährt es rückwärts aus dem Lastkraftwagen 1 heraus, dreht wieder um 180° und fährt vorwärts zur nächsten bereitgestellten Palette 9, um diese mit den Gabelzinken 5 aufzunehmen.

Bei dem Flurförderzeug 2 handelt es sich im vorliegenden Beispiel um ein autonomes Flurförderzeug 2 mit einer automatischen Steuereinheit 11, die ihre Auftragsdaten beispielsweise von einem übergeordneten Warenmanagementsystem 12 erhält.

Das Warenmanagementsystem 12 kennt die Art jedes einzelnen Ladeguts 3, insbesondere Größe, Gewicht, Art der Verpackung und besondere Merkmale der Ware. Diese Informationen werden an eine externe Datenverarbeitungseinheit 10 übermittelt. Sofern kein Warenmanagementsystem vorhanden ist, kann die Art des Ladeguts 3 auch über eine geeignete Sensorik bestimmt werden, beispielsweise Kamerasysteme, QR- oder Barcode-Reader etc..

Andererseits werden aus den Betriebsdaten des Flurförderzeugs 2 die Positionsdaten jedes einzelnen Ladeguts 3, welches mittels des Flurförderzeugs 2 im Lastkraftwagen 1 abgelegt wurde, ermittelt. Hierzu können zum Beispiel Fahrwegdaten und Bewegungsdaten einer Handhabungseinrichtung des Flurförderzeugs 2 dienen, die beim Beladevorgang gesammelt werden. Diese Informationen werden ebenfalls an die Datenverarbeitungseinheit 10 übermittelt.

Aus den Informationen des Warenmanagementsystems 12 oder einer entsprechenden Sensorik und den während des Beladevorgangs gesammelten Informationen des Flurförderzeugs 2 wird in der Datenverarbeitungseinheit 10 ein digitaler Zwilling des Ladezustands im Lastkraftwagen 1 erstellt. Insgesamt ergibt sich somit ein genaues Abbild davon, welches spezielle Ladegut 3 sich an welchem Ort innerhalb des Lastkraftwagens 1 befindet.

Die Informationen des digitalen Zwillings werden dem jeweiligen Empfänger am Zielort zur Verfügung gestellt, damit dort ein optimaler Entladevorgang ermöglicht wird. Die Informationen des digitalen Zwillings werden daher sinnvoller Weise in einer zuvor beschriebenen Cloudapplikation der Datenverarbeitungseinheit 10 hinterlegt. Somit können die Informationen am Zielort sowohl abgerufen, als auch bei Bedarf angepasst werden, wenn Ware entnommen oder hinzugefügt wird.

## Patentansprüche

1. Verfahren zum Be- und Entladen einer Ladeeinheit (7), insbesondere einer Ladefläche (7a) eines Lastkraftwagens (1) oder eines Güterzugwagons oder einer anderen geeigneten Transporteinrichtung, wobei während eines Beladevorgangs ein digitaler Zwilling des Ladezustands der Ladeeinheit (7) aus Daten des Beladevorgangs in einer elektronischen Datenverarbeitungseinheit (10) erstellt wird, wobei der digitale Zwilling Informationen über Art und Position der einzelnen Ladegüter (3) in der Ladeeinheit (7) enthält, und die Informationen des digitalen Zwillings für einen Entladevorgang zur Verfügung gestellt werden, **dadurch gekennzeichnet, dass** durch mindestens einen Beladevorgang Ladegüter (3) mittels mindestens eines Flurförderzeugs (2) in die Ladeeinheit (7) geladen und durch mindestens einen Entladevorgang Ladegüter (3) mittels mindestens eines Flurförderzeugs (2) aus der Ladeeinheit (7) entladen werden, wobei aus den Betriebsdaten des Flurförderzeugs (2) die Positionsdaten jedes einzelnen Ladeguts (3), welches mittels des Flurförderzeugs (2) in der Ladeeinheit (7) abgelegt wird, ermittelt werden.

2. Verfahren nach Anspruch 1, **dadurch gekennzeichnet, dass** die Informationen des digitalen Zwillings in einer Cloudapplikation oder anderartigen für Anwendungspartner zugänglichen Anwendung hinterlegt werden.

3. Verfahren nach Anspruch 1 oder 2, **dadurch gekennzeichnet, dass** die Informationen des digitalen Zwillings bei jedem Be- und Entladevorgang aktualisiert werden.

4. Verfahren nach einem der Ansprüche 1 bis 3, **dadurch gekennzeichnet, dass** der digitale Zwilling Informationen über das beim Beladevorgang eingesetzte Flurförderzeug (2) und/oder über das beim Entladevorgang eingesetzte Flurförderzeug (2) enthält.

5. Verfahren nach einem der Ansprüche 1 bis 4, **dadurch gekennzeichnet, dass** aus den Informationen des digitalen Zwillings ein optimierter Fahrweg des Flurförderzeugs (2) beim Entladevorgang berechnet wird.

6. Verfahren nach einem der Ansprüche 1 bis 5, **dadurch gekennzeichnet, dass** aus den Informationen des digitalen Zwillings eine für den Entladevorgang erforderliche Entladezeit im Voraus berechnet wird.

7. Verfahren nach einem der Ansprüche 1 bis 6, **dadurch gekennzeichnet, dass** die Informationen des digitalen Zwillings in einer elektronischen Steuerungseinheit (11) eines autonomen Flurförderzeugs (2) verarbeitet und zur Steuerung des autonomen Flurförderzeugs (2) beim Entladevorgang verwendet werden.

## Claims

1. Method for loading and unloading a loading unit (7), in particular a loading area (7a) of a heavy goods vehicle (1) or a freight wagon or another suitable transport device, wherein a digital twin of the loading state of the loading unit (7) is created from data of the loading process in an electronic data processing unit (10) during a loading process, wherein the digital twin contains information about the type and position of the individual items of freight (3) in the loading unit (7), and the information of the digital twin is provided for an unloading process, **characterized in that** items of freight (3) are loaded into the loading unit (7) by means of at least one industrial truck (2) using at least one loading process and items of freight (3) are unloaded from the loading unit (7) by means of at least one industrial truck (2) using at least one unloading process, wherein the position data of each individual item of freight (3) that is stored in the loading unit (7) by means of the industrial truck (2) is determined from the operating data of the industrial truck (2).

2. Method according to Claim 1, **characterized in that** the information of the digital twin is stored in a cloud application or some other application accessible to application partners.

3. Method according to Claim 1 or 2, **characterized in that** the information of the digital twin is updated during each loading and unloading process.

4. Method according to any of Claims 1 to 3, **characterized in that** the digital twin contains information about the industrial truck (2) used during the loading process and/or about the industrial truck (2) used during the unloading process.

5. Method according to any of Claims 1 to 4, **characterized in that** an optimized travel path of the industrial truck (2) during the unloading process is calculated from the information of the digital twin.

6. Method according to any of Claims 1 to 5, **characterized in that** an unloading time required for the unloading process is calculated in advance from the information of the digital twin.

7. Method according to any of Claims 1 to 6, **characterized in that** the information of the digital twin is processed in an electronic control unit (11) of an autonomous industrial truck (2) and used for controlling the autonomous industrial truck (2) during the unloading process.

## Revendications

1. Procédé de chargement et de déchargement d'une unité de chargement (7), en particulier d'une surface de chargement (7a) d'un camion (1) ou d'un wagon de train de marchandises ou d'un autre dispositif de transport approprié, un jumeau numérique de l'état de chargement de l'unité de chargement (7) étant créé pendant une opération de chargement à partir des données de l'opération de chargement dans une unité de traitement de données électronique (10), le jumeau numérique contenant des informations à propos du type et de la position des marchandises chargées (3) individuelles dans l'unité de chargement (7), et les informations du jumeau numérique étant mises à disposition pour une opération de déchargement, **caractérisé en ce que** les marchandises chargées (3) sont chargées dans l'unité de chargement (7) au moyen d'au moins un chariot de manutention (2) par au moins une opération de chargement et les marchandises chargées (3) sont déchargées de l'unité de chargement (7) au moyen d'au moins un chariot de manutention (2) par au moins une opération de déchargement, les données de position de chaque marchandise chargée (3) individuelle qui est déposée dans l'unité de chargement (7) au moyen du chariot de manutention (2) étant déterminées à partir des données de fonctionnement du chariot de manutention (2) .

2. Procédé selon la revendication 1, **caractérisé en ce que** les informations du jumeau numérique sont stockées dans une application en nuage ou un autre type d'application accessible aux partenaires d'application.

3. Procédé selon la revendication 1 ou 2, **caractérisé en ce que** les informations du jumeau numérique sont mises à jour à chaque opération de chargement et de déchargement.

4. Procédé selon l'une des revendications 1 à 3, **caractérisé en ce que** le jumeau numérique contient des informations à propos du chariot de manutention (2) utilisé pendant l'opération de chargement et/ou à propos du chariot de manutention (2) utilisé pendant l'opération de déchargement.

5. Procédé selon l'une des revendications 1 à 4, **caractérisé en ce qu'**une trajectoire optimisée du chariot de manutention (2) lors de l'opération de déchargement est calculée à partir des informations du jumeau numérique.

6. Procédé selon l'une des revendications 1 à 5, **caractérisé en ce qu'**un temps de déchargement nécessaire pour l'opération de déchargement est calculé à l'avance à partir des informations du jumeau numérique.

7. Procédé selon l'une des revendications 1 à 6, **caractérisé en ce que** les informations du jumeau numérique sont traitées dans une unité de commande électronique (11) d'un chariot de manutention (2) autonome et utilisées pour commander le chariot de manutention (2) autonome lors de l'opération de déchargement.
